**Europäisches Patentamt**

**European Patent Office**

**Office européen des brevets**

(19)

(11) Veröffentlichungsnummer: **0 342 662 B1**

# EUROPÄISCHE PATENTSCHRIFT

(12)

(45) Veröffentlichungstag der Patentschrift:
24.07.91 Patentblatt 91/30

(51) Int. Cl.⁵: **E06B 9/01, E04B 1/58,**
**F16B 7/04**

(21) Anmeldenummer: **89108916.1**

(22) Anmeldetag: **18.05.89**

(54) Vorrichtung für die Verbindung von Ziergitterelementen.

(30) Priorität: **20.05.88 DE 3817271**

(43) Veröffentlichungstag der Anmeldung:
**23.11.89 Patentblatt 89/47**

(45) Bekanntmachung des Hinweises auf die
Patenterteilung:
**24.07.91 Patentblatt 91/30**

(84) Benannte Vertragsstaaten:
**AT BE CH DE ES FR GB GR IT LI LU NL SE**

(56) Entgegenhaltungen:
**EP-A- 0 137 713**
**DE-A- 2 257 873**
**FR-A- 923 264**
**US-A- 4 497 148**

(73) Patentinhaber: **TEFO AG**
**Industriestrasse 11**
**CH-6300 Zug (CH)**

(72) Erfinder: **Steinmetz, Georg**
**Salinenstrasse 27**
**W-6550 Bad Kreuznach (DE)**

(74) Vertreter: **Schickedanz, Willi, Dipl.-Ing.**
**Langener Strasse 68**
**W-6050 Offenbach/Main (DE)**

## Beschreibung

Die Erfindung betrifft eine Vorrichtung für die Verbindung von Ziergitterelementen, nach dem Oberbegriff des Patentanspruchs 1.

Gitter für Türen, Zäune und dergleichen werden meistens in Schmiedewerkstätten oder in Schlossereien hergestellt. Die Herstellung eines solchen Gegenstands mit einer auffallend ornamentalen Wirkung erfordert in der Regel großes handwerkliches Können, so daß Heimwerker oder angelernte Arbeiter nicht in der Lage sind, ein solches Gitter herzustellen.

Es ist bereits ein Aufbauelement für einbruchsichere Schutzzäune, Ziergitter und dergleichen bekannt, bei dem dieses Aufbauelement aus einem Nichteisenmetall in Form eines Druckgußteils besteht (DE-U-73 01 882). Mehrere Aufbauelemente dieser Art werden miteinander verklebt, versplintet oder verschraubt, um hierdurch ein größeres Schutz- oder Ziergitter herzustellen. Nachteilig ist hierbei, daß die Verbindung mehrerer Aufbauelemente nicht fest genug und ein Verdrehen der Teile relativ zueinander nicht ausgeschlossen ist.

Weiterhin ist ein zusammensetzbarer Zaun mit Führung aufweisenden Pfählen bekannt, bei dem die Führungen schwalbenschwanzförmig ausgebildet sind und in diese Führungen entsprechende schwalbenschwanzförmige Leisten der zwischen den Pfählen von oben eingeschobenen Zaunfelder eingreifen (DE-C-870 473). Mit den Nuten in den Pfählen können indessen nur ganze Zaunfelder zwischen zwei Pfosten angeordnet werden. Eine Verbindung von Ziergitterelementen ist nicht möglich. Außerdem gestatten Schwalbenschwanzführungen nur eine vertikale Einführung von oben oder unten, was in vielen Fällen zu Problemen bei der Montage führt.

Bei einem Verfahren zum Herstellen gekrümmter Oberflächen in armiertem Beton ist es bekannt, Verbindungselemente zu verwenden, die zwei Scheiben mit Nuten enthalten, in die Vorsprünge von hammerköpfigen Einzelteilen eingreifen, die mit Hilfe der Scheiben miteinander verbunden werden (FR-A-573 614). Bei diesen Verbindungselementen werden jeweils zwei Scheiben mittels einer Schraube zusammengepreßt. Nachteilig ist hierbei allerdings, daß der Schraubenkopf und die zugehörige Schraubenmutter frei zugänglich sind, so daß eine Demontage von Unbefugten vorgenommen werden kann. Außerdem ragen die Verbindungselemente über die zu verbindenden Teile hinaus, was zu unschönen Abschlüssen führt.

Es ist ferner eine Klemmverbindung für aneinanderstoßende Profile bekannt, bei welcher eine Schraube bzw. Niete, die zwei Elemente miteinander verbindet, nicht freiliegt (DE-A-24 03 272). Diese Klemmverbindung kann für Handlaufprofile, für Geländer oder als Randprofil für Behälter verwendet werden, um Teilstücke dieser Gegenstände miteinander zu verbinden. Diese Teilstücke müssen jedoch ein bestimmtes Profil aufweisen, was auf Ziergitterelemente und dergleichen nicht zutrifft (vgl. DE-U-18 70 603, DE-A-26 04 814, DE-A-20 14 866, FR-A-2 180 590, FR-A-1 595 984, GB-A-1 276 643, DE-A-1 625 258, US-A-3 289 376).

Auch andere bekannte Verbindungselemente ermöglichen es nicht, Ziergitter so miteinander zu verbinden, daß die Verbindungsstellen von außen für Unbefugte nicht zugänglich sind.

Es ist weiterhin eine Verbindung bekannt, die zwei Verbindungselemente zur Verklammerung von zwei Teilen aufweist (US-A-4 497 148, Fig. 2). Hierbei werden die beiden Verbindungselemente über eine Schraube zusammengehalten, und die schwalbenschwanzförmigen Enden der Verbindungselemente greifen in entsprechende Aussparungen der Teile ein.

Bei einer anderen Montageverbindung sind ebenfalls zwei Verbindungselemente vorgesehen, die über eine Schraube miteinander gekoppelt sind (FR-A-923 264). Die beiden Verbindungselemente weisen jeweils zwei Nuten auf, in die Vorsprünge von zu verbindenden Teilen eingreifen.

"Desweiteren ist ein Knotengitter nach Art eines Kunstschmiede-Eisengitters aus Metallprofilstäben rechteckigen Querschnitts bekannt, mit dem vier Gitterelemente miteinander verbunden werden können (DE-A-2 257 873). Dieses Knotengitter weist jedoch drei grundsätzlich verschiedene Verbindungselemente auf, nämlich eine Klammer, zwei Bolzen und ein Kupplungsstück. Außerdem müssen die Endbereiche der Gitterelemente mit Bohrungen versehen werden.

Schließlich ist ein Verbundprofilstab für Fenster- oder Türrahmen bekannt, der zwei Verbindungselemente aufweist, mit denen zwei Profile miteinander verbunden werden können (DE-B-1 214 375). Eine Lehre, wie vier Ziergitterelemente, die besonders gestaltete Elemente besitzen, mit nur zwei Verbindungselementen verbunden werden können, ist diesem Verbundprofilstab nicht zu entnehmen."

Der Erfindung liegt deshalb die Aufgabe zugrunde, eine Verbindungseinrichtung von Ziergitter- identischen elementen zu schaffen, die für die Montage von vier Einzelteilen mit nur zwei Verbindungselementen und einem Verbindungsstift auskommt.

Diese Aufgabe wird gemäß den Merkmalen des Patentanspruchs 1 gelöst.

Der mit der Erfindung erzielte Vorteil besteht insbesondere darin, daß ganz verschiedenartige Elemente und Profile verdrehfest und auf einfache Weise miteinander verbunden werden können. Da die Verbindung von Laien hergestellt werden kann, ist es möglich, die Einzelelemente in Super- oder Baumärkten zu verkaufen.

Ausführungsbeispiele der Erfindung sind in der Zeichnung dargestellt und werden im folgenden näher beschrieben. Es zeigen :

Fig. 1      zwei Verbindungseinrichtungen, mit denen jeweils zwei Ziergitterelemente miteinander verbunden werden ;

Fig. 2      zwei weitere Verbindungselemente, mit denen jeweils zwei Ziergitterelemente miteinander verbunden werden, wobei die Verbindungselemente gegen Diebstahl abgesichert sind ;

Fig. 3      ein Ziergitterelement ;

Fig. 4      ein aus vier Ziergitterelementen bestehendes Ornament ;

Fig. 5      eine vergrößerte Detaildarstellung der Fig. 1, aus welcher das Ineinandergreifen von Verbindungselement und Ziergitter deutlich hervorgeht.

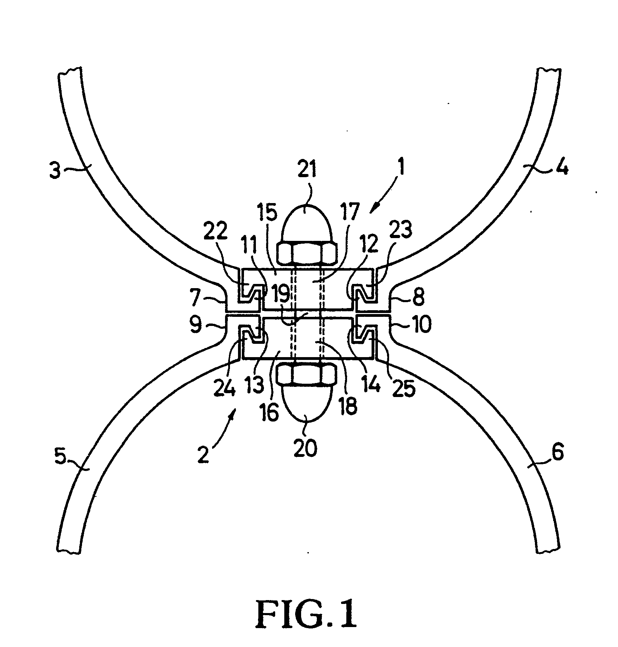

In der Fig. 1 sind zwei Verbindungselemente 1 und 2 dargestellt, die jeweils zwei Ziergitterelemente 3, 4 bzw. 5, 6 miteinander verbinden. Die Ziergitterelemente 3 bis 6 sind hierbei gekrümmt und weisen an ihren Enden einen L-förmigen Abschluß auf, wobei der große Schenkel 7, 8, 9, 10 des L das Ende des Elements 3 bis 6 unmittelbar abschließt, während der kleine Schenkel 11 bis 14 des L einen Abstand von diesem Ende hat und auf der Innenseite abgeschrägt ist. Die Verbindungselemente 1, 2 sind identisch aufgebaut und besitzen jeweils einen mittleren Teil 15, 16 mit jeweils einer Durchbohrung 17, 18. Beide Verbindungselemente 1, 2 sind mittels eines Bolzens 19 verbunden, der durch die Durchbohrungen 17, 18 gesteckt ist und an seinem einen Ende einen unbeweglichen Kopf 20 und an seinem anderen Ende ein Gewinde mit einem aufschraubbaren Kopf 21 besitzt. Zu beiden Seiten des mittleren Teils 15, 16 der Verbindungselemente 1, 2 sind Schenkel oder Schienen 22 bis 25 vorgesehen, die in die Aussparungen eingreifen, die von den beiden Schenkeln 7 bis 10 bzw. 11 bis 14 des jeweiligen L gebildet werden.

Die Aussparungen und Schienen sind hierbei in etwa trapezförmig ausgebildet, und zwar so, daß die Schienen 22 bis 25 exakt in die Öffnungen von oben her eingepaßt werden können. Ein seitliches Einschieben wie bei einer Schwalbenschwanzführung gemäß DE-U-18 70 603 ist somit nicht erforderlich.

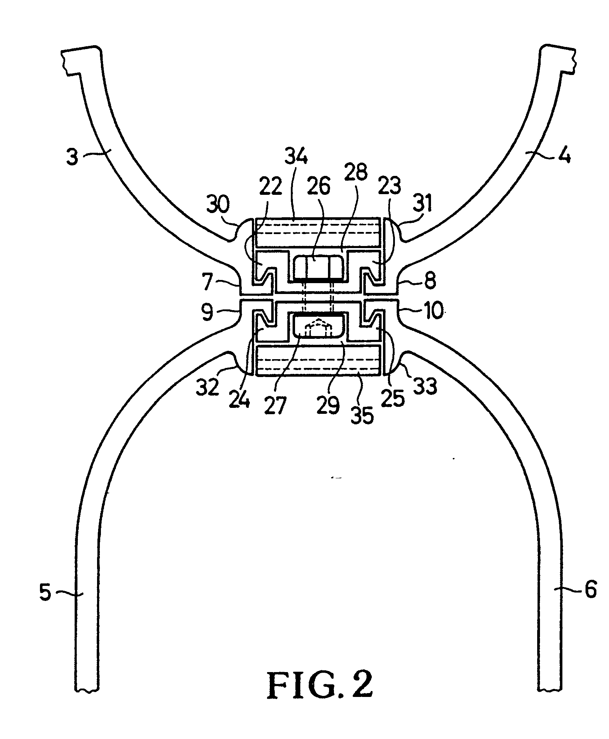

In der Fig. 2 ist eine Abwandlung der Einrichtung gemäß Fig. 1 dargestellt, die eine zusätzliche Diebstahlsicherung aufweist. Während bei der Einrichtung gemäß Fig. 1 die Köpfe 20, 21 von außen zugänglich sind, trifft dies auf die Köpfe 26, 27 der Einrichtung gemäß Fig. 2 nicht zu. Im Gegensatz zu den Köpfen 20, 21 sind die Köpfe 26, 27 flach ausgebildet, und zwar so flach, daß sie in entsprechende Aussparungen 28, 29 in den Verbindungselementen 1, 2 passen. Durch die weitere Maßnahme, daß die großen Schenkel 7 bis 10 des L eine Verlängerung 30 bis 33 aufweisen, ist es möglich, zusätzliche Abdeckelemente 34, 35 vorzusehen, welche die Köpfe 26, 27 unzugänglich machen. Die zusätzlichen Schenkellängen entsprechen hierbei in etwa der Stärke der Abdeckelemente 34, 35. Derartige Abdeckelemente sind in der deutschen Patentanmeldung DE-A-37 21 869.7 vorgeschlagen worden. Sie weisen einen Grund- oder Haltesteg auf, von dem ein erster, senkrecht hierzu verlaufender Schenkel und ein zu diesem hingeneigter zweiter Schenkel ausgehen, wobei der zweite geneigte Schenkel jedes Elements auf seiner Außenseite wenigstens eine Einkerbung aufweist und im Einbauzustand ein Vorsprung des zweiten Elements in die Einkerbung des ersten Elements und ein Vorsprung des ersten Elements in die Einkerbung des zweiten Elements einrastet.

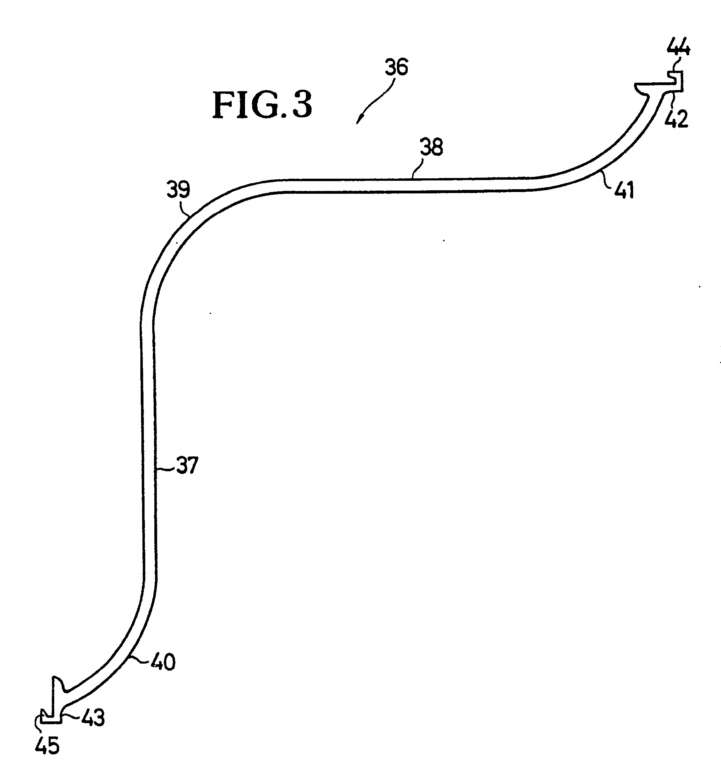

In der Fig. 3 ist ein konkretes Ziergitterelement 36 dargestellt, das aus zwei geraden Profilteilen 37, 38, einem diese Profilteile 37, 38 verbindenden gekrümmten Mittelteil 39 und zwei gekrümmten Endbereichen 40, 41 besteht. Die Endbereiche 40, 41 sind hierbei durch große Schenkel 42, 43 des L abgeschlossen, denen die kleinen Schenkel 44, 45 dieses L gegenüberliegen.

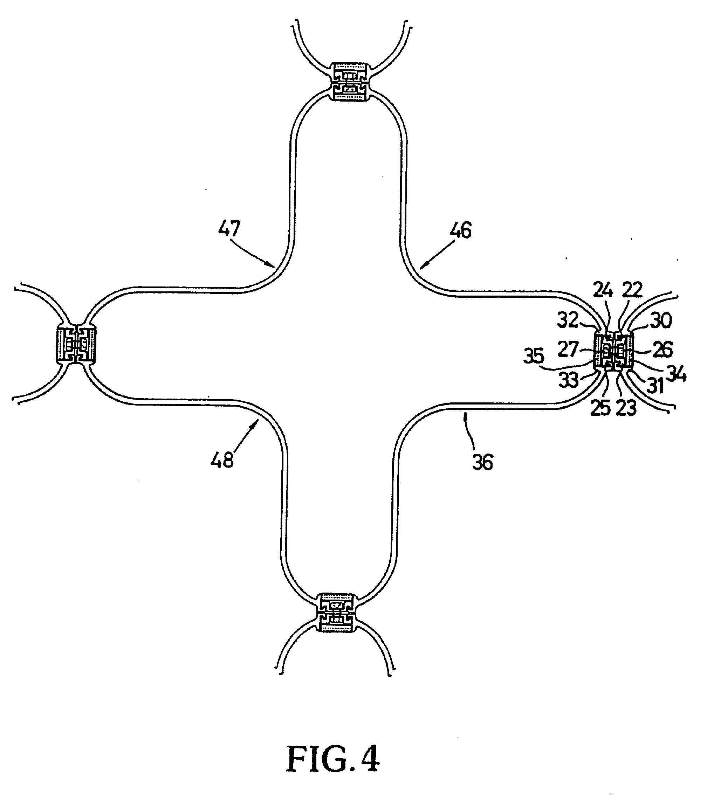

In der Fig. 4 ist dargestellt, wie derartige Ziergitterelemente miteinander verbunden werden können. Als Verbindungselemente sind die in der Fig. 2 dargestellten Elemente verwendet. Vier Ziergitterelemente 36, 46, 47, 48 bilden hierdurch ein kreuzförmiges Ornament, das sich bei einem großen Gitter mehrfach wiederholt.

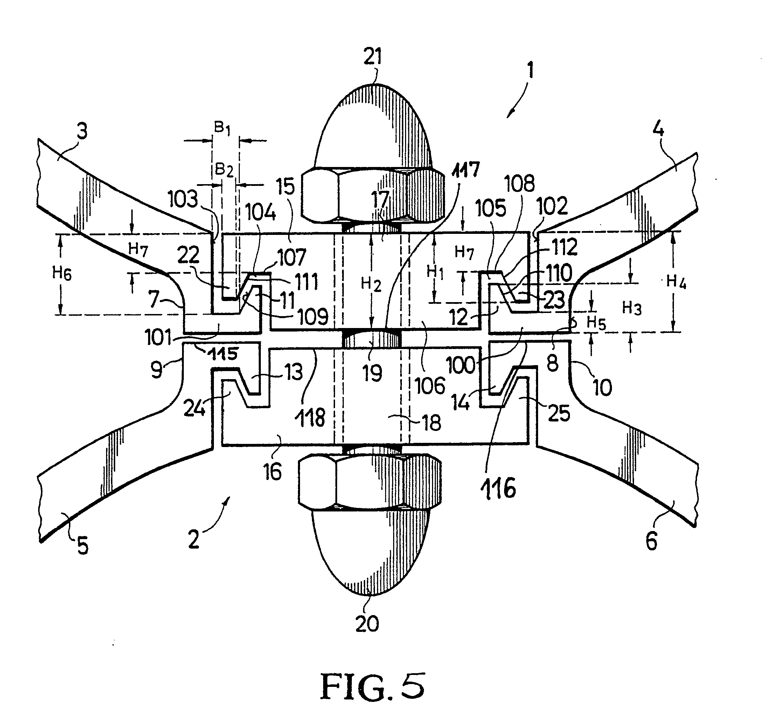

In der Fig. 5 ist die Verbindung gemäß Fig. 1 noch einmal in vergrößertem Maßstab dargestellt. Man erkennt hierbei, daß die Schenkel oder Schienen 22, 23 eine Höhe $H_1$ besitzen, die kleiner als die Höhe $H_2$ des Grundkörpers 106 oder mittleren Teils 15 des Verbindungselements 1 ist. Ferner ist erkennbar, daß das Ende eines Ziergitterelements 3, 4 einen Flansch 103, 102 mit der Höhe $H_4$ aufweist, der sich in einem seitlichen Steg 101, 100 mit der Höhe $H_5$ fortsetzt und in den vertikalen Schenkel 11, 12 mit der Höhe $H_3$ übergeht. Die Höhe $H_1$ einer Schiene 22, 23 entspricht etwa der Differenz der Höhe $H_4$ des Endes eines Elements 3, 4 und der Höhe $H_5$ eines Stegs 100, 101 bzw. der Höhe $H_6$ des Elements 3, 4. Andererseits entspricht die Höhe $H_3$ eines vertikalen Schenkels 11, 12 im wesentlichen der Differenz der Höhe $H_2$ des Grundelements 106 und der Höhe $H_7$ eines Stegs 107, 108 des Verbindungselements 3, 4. Die durch das Verbindungselement 3, 4 gebildete Nut 104, 105 ist gerade so groß, daß der Schenkel 11, 12 des Elements 3, 4 hineinpaßt. Sowohl an der Schiene 22, 23 als auch an dem Schenkel 11, 12 sind Abschrägungen 111, 112 ; 109, 110 vorgesehen, die im montierten Zustand aufeinander liegen.

3

Die Breite $B_1$ des Stegs 101, 100 und die Breite $B_2$ am Ende der Schiene 22, 23 entsprechen im wesentlichen einander.

**Patentansprüche**

1. Vorrichtung für die Verbindung von Ziergitterelementen (3, 4 ; 5, 6)

1.1 mit Durchbohrungen (17, 18) aufweisenden Verbindungselementen (1, 2)

1.1.1 die vier Elemente (3, 4 ; 5, 6) mit jeweils ebenflächigen Stegen (100, 101, 115, 116) miteinander verbinden,

1.1.1.1 wobei die ebenflächigen Stege (100, 101, 115, 116) jeweils zweier übereinanderliegender Elemente (4, 6 bzw. 3, 5) parallel zueinander ausgerichtet und

1.1.1.2 jeweils zwei der zu verbindenden Elemente (3, 4 bzw. 5, 6) nebeneinander angeordnet und

1.1.2 mit Verbindungsstiften (19), die in die Durchbohrungen (17, 18) eingeschoben sind, miteinander verbunden sind ; **dadurch gekennzeichnet, daß**

1.2 jeweils zwei der miteinander zu verbindenden Elemente (3, 5 bzw. 4, 6) ohne Abstand übereinander liegen ;

1.3 zwei identische Verbindungselemente (1, 2) mit jeweils

1.3.1 einer mittigen Bohrung (17, 18) für die Aufnahme eines Verbindungsstifts (19) vorgesehen sind, wobei die Verbindungselemente (1, 2)

1.3.2 jeweils zwei Nuten (104, 105 ; 113, 114)

1.3.3 und zwei Vorsprünge (22, 23 ; 24, 25)

1.3.3.1 zu beiden Seiten der jeweiligen Bohrung (17, 18) aufweisen,

1.3.4 wobei die zu verbindenden Elemente (3, 4 ; 5, 6) ebenfalls Nuten und Vorsprünge (11, 12 ; 13, 14) besitzen und

1.3.5 jeweils ein Verbindungselement (1 bzw. 2) in zwei ihm zugeordnete und nebeneinander liegende Elemente (3, 4 bzw. 5, 6) eingreift, und

1.3.6 wobei die Vorsprünge (22, 23 ; 24, 25) der Verbindungselemente (1, 2) in die Nuten der zu verbindenden Elemente (3, 4 ; 5, 6)

1.3.7 und die Vorsprünge (11, 12 ; 13, 14) der zu verbindenden Elemente (3, 4 ; 5, 6) in die Nuten (104, 105 ; 113, 114) der Verbindungselemente (1, 2) eingreifen und

1.3.8 die ebenflächigen Stege (100, 101, 115, 116) aller vier Elemente (3, 4, 5, 6) jeweils mit einer ebenen Fläche (117, 118) eines Verbindungselements (1, 2) fluchten, das einen Abstand zwischen zwei Elementen (3, 4 ; 5, 6) herstellt.

2. Vorrichtung nach Anspruch 1, **dadurch gekennzeichnet, daß** der Flansch (102, 103) eines zu verbindenden Elements (3, 4) parallel zu dem Verbindungsstift (19) verläuft.

3. Vorrichtung nach Anspruch 1, **dadurch gekennzeichnet, daß** der Vorsprung (11, 12) der zu verbindenden Elemente (3, 4) eine nach innen gerichtete Abschrägung (109, 110) aufweist.

4. Vorrichtung nach Anspruch 1, **dadurch gekennzeichnet, daß** der Vorsprung (22, 23) eines Verbindungselements (1, 2) eine nach außen gerichtete Abschrägung (111, 112) aufweist.

5. Vorrichtung nach den Ansprüchen 3 und 4, **dadurch gekennzeichnet, daß** die Abschrägungen (109, 110) der zu verbindenden Elemente (3, 4) und die Abschrägungen (111, 112) des Verbindungselements (1, 2) im montierten Zustand aufeinanderliegen.

6. Vorrichtung nach Anspruch 1, **dadurch gekennzeichnet, daß** sich Verbindungsenden (42, 44 ; 43, 45) an einem gekrümmten Ziergitterelement (36) befinden, das sich von links unten nach rechts oben krümmt (40), dann gerade verläuft (37) und sich hierauf nach rechts krümmt (31), um erneut gerade zu verlaufen (38) und um sich dann wieder nach links oben zu krümmen (41).

7. Vorrichtung nach Anspruch 1, **dadurch gekennzeichnet, daß** das Verbindungselement eine Aussparung (28, 29) aufweist, deren Größe an die Größe eines Schraub- oder Nietkopfs (26, 27) angepaßt ist, so daß dieser Kopf (26, 27) versenkt ist.

8. Vorrichtung nach Anspruch 1, **dadurch gekennzeichnet, daß** wenigstens jeweils ein Ende der Ziergitterelemente (3 bis 6) so ausgebildet ist, daß ein Verbindungselement (22 bis 25) durch eine Abdeckvorrichtung (34, 35) bündig abgeschlossen ist.

**Claims**

1. Device for connecting decorative screen elements (3, 4 ; 5, 6)

1.1 with connecting elements (1, 2) which have through-bores (17, 18)

1.1.1 and connect four elements (3, 4 ; 5, 6) each with plane-faced cross pieces (100, 101, 115, 116) to one another,

1.1.1.1 wherein the plane-faced cross pieces (100, 101, 115, 116) of each two superimposed elements (4, 6 or 3, 5) are orientated parallel to one another and

1.1.1.2 each two of the elements (3, 4 or 5, 6) to be connected are arranged next to one another and

1.1.2 are connected to one another with connecting pins (19) inserted into the through-bores (17, 18) ; characterised in that

1.2 each two of the elements (3, 5 or 4, 6) which are to be connected to one another are superimposed without spacing ;

1.3 two identical connecting elements (1, 2) each with

1.3.1 a central bore (17, 18) for receiving a connecting pin (19) are provided, wherein the connecting elements (1, 2)

1.3.2 each have two grooves (104, 105 ; 113, 114)

1.3.3 and two projections (22, 23 ; 24, 25)

1.3.3.1 on both sides of the respective bore (17, 18),

1.3.4 wherein the elements (3, 4 ; 5, 6) to be connected also possess grooves and projections (11, 12 ; 13, 14) and

1.3.5 a respective connecting element (1 or 2) engages in two elements (3, 4 or 5, 6) which are located next to one another and are allocated to it, and

1.3.6 wherein the projections (22, 23 ; 24, 25) of the connecting elements (1, 2) engage in the grooves of the elements to be connected (3, 4 ; 5, 6)

1.3.7 and the projections (11, 12 ; 13, 14) of the elements (3, 4 ; 5, 6) to be connected engage in the grooves (104, 105 ; 113, 114) of the connecting elements (1, 2) and

1.3.8 the plane-faced cross pieces (100, 101, 115, 116) of all four elements (3, 4, 5, 6) are each aligned with a plane face (117, 118) of a connecting element (1, 2) which produces spacing between two elements (3, 4 ; 5, 6).

2. Device according to claim 1, characterised in that the flange (102, 103) of an element to be connected (3, 4) extends parallel to the connecting pin (19).

3. Device according to claim 1, characterised in that the projection (11, 12) of the elements to be connected (3, 4) has an inwardly directed bevel (109, 110).

4. Device according to claim 1, characterised in that the projection (22, 23) of a connecting element (1, 2) has an outwardly directed bevel (111, 112).

5. Device according to claims 3 and 4, characterised in that the bevels (109, 110) of the elements (3, 4) to be connected and the bevels (111, 112) of the connecting element (1, 2) are superimposed in the assembled state.

6. Device according to claim 1, characterised in that connecting ends (42, 44 ; 43, 45) are located on a curved decorative screen element (36) which curves from the bottom left to the top right (40), then extends straight (37) and subsequently curves to the right (31) in order again to extend straight (38) and then to curve to the top left (41).

7. Device according to claim 1, characterised in that the connecting element has a recess (28, 29) of which the size is adapted to the size of a screw or rivet head (26, 27) so that this head (26, 27) is countersunk.

8. Device according to claim 1, characterised in that at least one respective end of the decorative grid elements (3 to 6) is constructed such that a connecting element (22 to 25) is closed in a flush manner by a covering device (34, 35).

## Revendications

1. Dispositif pour assembler des éléments de grilles décoratives (3, 4 ; 5, 6)

1.1 avec des éléments de liaison (1, 2) présentant des alésages (17, 18)

1.1.1. reliant les quatre éléments (3, 4 ; 5, 6) par des nervures (100, 101, 115, 116) présentant chacune une surface plane,

1.1.1.1 les nervures (100, 101, 115, 116) présentant chacune une surface plane de deux éléments respectifs (4, 6 ou 3, 5) superposés étant parallèles l'une à l'autre et

1.1.1.2, respectivement, deux des éléments à relier (3, 4 ou 5, 6) étant disposés l'un à côté de l'autre et

1.1.2 étant reliés par des tiges de raccordement (19) introduites dans les alésages (17, 18) ; caractérisé en ce que

1.2, respectivement, deux des éléments à relier (3, 5 ou 4, 6) sont superposés sans écartement ;

1.3 en ce que sont prévus deux éléments de liaison identiques (1, 2) comprenant chacun

1.3.1 un alésage central (17, 18) destiné à recevoir une tige de raccordement (19), les éléments de liaison (1, 2)

1.3.2 présentant deux nervures (104, 105 ; 113, 114)

1.3.3 et deux avancées (22, 23 ; 24, 25)

1.3.3.1 des deux côtés de l'alésage (17, 18) respectif,

1.3.4 les éléments à relier (3, 4 ; 5, 6) étant munis également de nervures et de saillies (11, 12 ; 13, 14) et

1.3.5 en ce que chaque élément de liaison (1 ou 2) vient en prise dans deux éléments juxtaposés (3, 4 ou 5, 6) qui lui sont associés, et

1.3.6 les saillies (22, 23 ; 24, 25) des éléments de liaison (1, 2) venant en prise dans les nervures des éléments à relier (3, 4 ; 5, 6)

1.3.7 et les saillies (11, 12 ; 13, 14) des éléments à relier (3, 4 ; 5, 6) venant en prise dans les nervures (104, 105 ; 113, 114) des éléments de liaison (1, 2) et

1.3.8 en ce que les nervures présentant une surface plane (100, 101, 115, 116) des quatre éléments (3, 4, 5, 6) sont alignées à chaque fois avec une surface plane (117, 118) d'un élément de liaison (1, 2) qui crée un écart entre deux éléments (3, 4 ; 5, 6).

2. Dispositif suivant la revendication 1, caractérisé en ce que la bride (102, 103) d'un élément à relier (3, 4) est parallèle à la tige de raccordement (19).

3. Dispositif suivant la revendication 1, caractérisé en ce que la saillie (11, 12) des éléments à relier (3, 4) présente une surface oblique (109, 110) dirigée vers l'intérieur.

4. Dispositif suivant la revendication 1, caractérisé en ce que la saillie (22, 23) d'un élément de liaison (1, 2) présente une surface oblique (111, 112) dirigée vers l'extérieur.

5. Dispositif suivant les revendications 3 et 4, caractérisé en ce que les surfaces obliques (109, 110) des éléments à relier (3, 4) et les surfaces obliques (111, 112) de l'élément de liaison (1, 2) se trouvent l'une au-dessus de l'autre en position monté.

6. Dispositif suivant la revendication 1, caractérisé en ce que des extrémités de liaison (42, 44 ; 43, 45) se trouvent sur un élément de grille décorative (36) courbe, ayant une courbure allant de la gauche en bas vers la droite en haut (40), s'étend ensuite en ligne droite (37) et puis se courbe vers la droite (31), pour continuer encore en ligne droite (38) et se courber de nouveau en haut vers la gauche (41).

7. Dispositif suivant la revendication 1, caractérisé en ce que l'élément de liaison présente un évidement (28, 29) dont la dimension est adaptée à la grandeur d'une tête de vis ou d'une tête de rivet (26, 27) de façon que cette tête (26, 27) soit noyée.

8. Dispositif suivant la revendication 1, caractérisé en ce qu'au moins une extrémité des éléments de grille décorative (3 à 6) est réalisée de façon qu'un élément de liaison (22 à 25) se termine par une surface plane mise à niveau par un dispositif de recouvrement (34, 35).

FIG.1

FIG. 2

# FIG.3

FIG.4

FIG. 5